# EUROPÄISCHE PATENTSCHRIFT

(11) **EP 2 698 580 B1**
(45) Veröffentlichungstag und Bekanntmachung des Hinweises auf die Patenterteilung: **07.10.2015**
(21) Anmeldenummer: 13003785.6
(22) Anmeldetag: 30.07.2013
(51) Int. Cl.: F23B 40/04, A47J 37/07

(54) **Hubtischbrenner, Grill mit Hubtischbrenner und Biomassefeuerung mit Hubtischbrenner**
Lifting table burner, grill with lifting table burner and biomass firing with lifting table burner
Brûleur à table élévatrice, grill doté d'un brûleur à table élévatrice et chauffage à biomasse doté d'un brûleur à table élévatrice

(30) Priorität: 16.08.2012 DE 102012016308
(43) Veröffentlichungstag der Anmeldung: 19.02.2014
(73) Patentinhaber: HET - Heiz- und Energietechnik Entwicklungs GmbH, 5201 Seekirchen am Wallersee (AT)
(72) Erfinder: Bauer, Thomas, 5020 Salzburg (AT)
(74) Vertreter: Samson & Partner Patentanwälte mbB

(56) Entgegenhaltungen:
- WO-A2-2012/012910
- BE-A1- 401 397
- CH-A- 277 218
- DE-A1- 3 621 100
- FR-A3- 2 811 534
- US-A- 4 779 544

## Beschreibung

### GEBIET DER ERFINDUNG

Die vorliegende Erfindung bezieht sich allgemein auf einen Brenner zum Verbrennen von schüttfähigem, festen, organischen Brennstoff und insbesondere auf einen Hubtischbrenner zum Verbrennen von schüttfähigem, festen, organischen Brennstoff, einen Grill mit einem solchen Hubtischbrenner und eine Biomassefeuerung mit einem solchen Hubtischbrenner.

### HINTERGRUND DER ERFINDUNG

Es sind allgemein Brenner zum Verbrennen von festen Brennstoffen, die bspw. auf Kohle oder auf Holz basieren, bekannt. Insbesondere sind Brenner zum Verbrennen von sogenannten Pellets (zylindrische Holzpresslinge) bekannt.

Solche Pelletbrenner kommen typischerweise in Pelletheizungen oder Kaminöfen zum Einsatz, die bspw. als Heizung und zur Warmwassererzeugung dienen. Dementsprechend komplex und teuer sind solche bekannten großen Pelletheizungen.

Andererseits sind auch konstruktiv einfach gehaltene Brenner bekannt, wie bspw. Scheitholzöfen, Holzkohlegrill, Gasgrill oder kleine Gasheizungen. Bei solchen Brennern muss im Gegensatz zu den großen Zentralheizungen, die über eine automatisierte Brennstoffzufuhr verfügen, typischerweise der Brennstoff per Hand vom Benutzer eingefüllt werden. Bei Scheitholz- und Holzkohlebrenner führt dies allerdings oftmals zur Verschmutzung aufgrund von Holz- bzw. Holzkohlestaub. Bei Gasgrill und kleinen Gasheizungen ist es oftmals erforderlich, spezielle Gasflaschen für den Brenner zu transportieren und anzuschließen. Insbesondere das Anschließen der Gasflasche erfordert von dem Benutzer entsprechende Fachkenntnis. WO 2012/012910 A2 offenbart einen Brenner zur Verbrennung von granulatförmigem Brenngut mit einem senkrechten Rohr in dem eine Förderschnecke das Brenngut zu einem am oberen Ende des Rohrs angeordneten kreisrunden Rost befördert.

Dementsprechend ist es Aufgabe der vorliegenden Erfindung einen Brenner zum Verbrennen eines schüttfähigen, festen, organischen Brennstoffs, insbesondere Pellets, bereitzustellen und einen Grill und eine Biomassefeuerung mit einem solchen Brenner.

### KURZFASSUNG DER ERFINDUNG

Nach einem ersten Aspekt stellt die vorliegende Erfindung einen Hubtischbrenner zur Verbrennung eines schüttfähigen, festen, organischen Brennstoffs, insbesondere Pellets, bereit, der umfasst: einen zylinderförmigen Gehäuseabschnitt zum Aufnehmen des Brennstoffs, einen Verbrennungsabschnitt, der in einem Endbereich des zylinderförmigen Gehäuseabschnitts angeordnet ist, und einen Hubtisch zum Zuführen des in dem zylinderförmigen Gehäuseabschnitt angeordneten Brennstoffes gegen die Schwerkraft in den Verbrennungsabschnitt, wobei der Hubtisch innerhalb des zylinderförmigen Gehäuseabschnitts angeordnet ist und innerhalb des zylinderförmigen Gehäuseabschnitts verschiebbar ist.

Nach einem zweiten Aspekt stellt die vorliegende Erfindung einen Grill zum Grillen von Grillgut, bereit, der umfasst: einen Hubtischbrenner nach dem ersten Aspekt; ein Grillgehäuse, das an einem Ende des Verbrennungsabschnitts angeordnet ist; und eine Grillplatte, die oberhalb des Verbrennungsabschnitts angeordnet und mit dem Grillgehäuse verbunden ist.

Nach einem dritten Aspekt stellt die vorliegende Erfindung eine Biomassefeuerung zum Verbrennen von schüttfähigen, festen, organischen Brennstoff, insbesondere Pellets, bereit, die umfasst: einen Hubtischbrenner nach dem ersten Aspekt, und einen Brennraumgehäuseabschnitt, der an dem Ende des Hubtischbrenners angeordnet ist, an dem auch der Verbrennungsabschnitt angeordnet ist.

Weiter Aspekte und Merkmale der vorliegenden Erfindung ergeben sich aus den abhängigen Ansprüchen, der beigefügten Zeichnung und der nachfolgenden Beschreibung bevorzugter Ausführungsbeispiele.

### KURZBESCHREIBUNG DER ZEICHNUNG

Ausführungsbeispiele der Erfindung werden nun beispielhaft und unter Bezugnahme auf die beigefügte Zeichnung beschreiben, in der:
Fig. 1 ein Ausführungsbeispiel eines Hubtischbrenners in Übereinstimmung mit der vorliegenden Erfindung in einer schematischen Schnittansicht veranschaulicht;
Fig. 2 ein Ausführungsbeispiel eines Grill mit dem Hubtischbrenner von Fig. 1 in einer schematischen Schnittansicht veranschaulicht;
Fig. 3 ein Ausführungsbeispiel eines Pelletofens mit einem Hubtischbrenner in einer schematischen Schnittansicht veranschaulicht;
Fig. 4 den Pelletofen von Fig. 3 in einer horizontalen Schnittansicht zeigt;
Fig. 5 den Pelletofen von Fig. 3 in einer aufgeklappt Position zum Befüllen mit Pellets zeigt; und
Fig. 6 den Pelletofen von Fig. 3 in einer weiteren schematischen Seitenansicht veranschaulicht.

### BESCHREIBUNG DER BEVORZUGTEN AUSFÜHRUNGSBEISPIELE

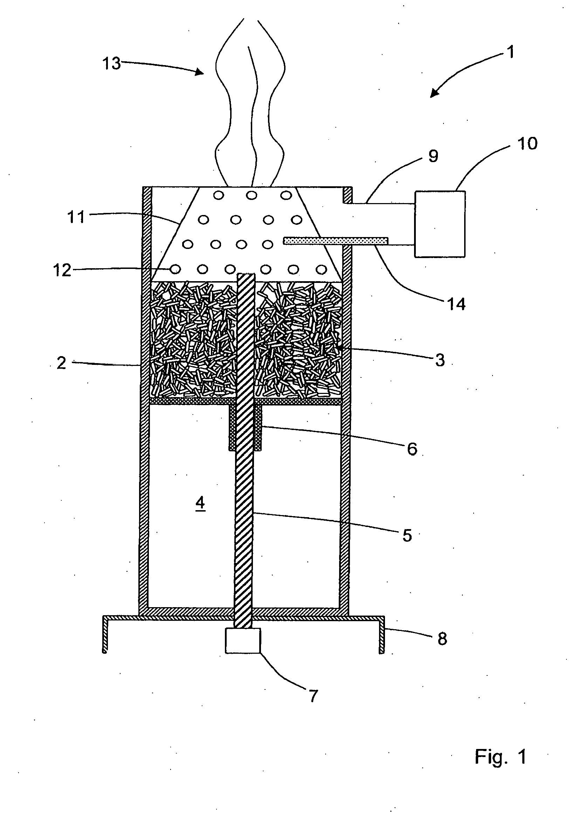

In Fig. 1 ist ein Ausführungsbeispiel eines Hubtischbrenners 1 in Übereinstimmung mit der vorliegenden Erfindung veranschaulicht. Vor einer detaillierten Beschreibung folgen zunächst allgemeine Erläuterungen zu den Ausführungsbeispielen und deren Vorteile.

Wie eingangs erwähnt sind allgemein Brenner zum Verbrennen von festen Brennstoffen, die bspw. auf Kohle oder auf Holz basieren, bekannt. Insbesondere sind Brenner zum Verbrennen von sogenannten Pellets, zylindrische Holzpresslinge, bekannt.

Diese bekannten schüttfähigen, festen Brennstoffe, wie Pellets oder Hackschnitzelgut sind bekanntermaßen in vorgegebenen Mengen, bspw. als 25 kg Säcke erhältlich und sind für den Endverbraucher oftmals leichter handhabbar als bspw. die eingangs erwähnten Gasflaschen. Außerdem können Pelltes oder Hackschnitzelgut einfach und nahezu staubfrei aus dem Sack in einen entsprechenden Brennstoffbehälter geschüttet werden.

Dementsprechende umfasst nach den Ausführungsbeispielen ein Hubtischbrenner zur Verbrennung eines schüttfähigen, festen, organischen Brennstoffs, insbesondere Pellets, einen zylinderförmigen Gehäuseabschnitt zum Aufnehmen des Brennstoffs, einen Verbrennungsabschnitt, der in einem Endbereich des zylinderförmigen Gehäuseabschnitts angeordnet ist, und einen Hubtisch zum Heben des in dem zylinderförmigen Gehäuseabschnitt angeordneten Brennstoffes gegen die Schwerkraft in den Verbrennungsabschnitt, wobei der Hubtisch innerhalb des zylinderförmigen Gehäuseabschnitts angeordnet ist und innerhalb des zylinderförmigen Gehäuseabschnitts verschiebbar ist.

Wie oben erwähnt, umfasst ein schüttfähiger, fester und organischer Brennstoff in den Ausführungsbeispielen bspw. Hackschnitzelgut oder Pellets, die aus Holz oder anderen Pflanzenresten hergestellt sind.

Der zylinderförmige Gehäuseabschnitt des Hubtischbrenners ist dazu ausgestaltet, vertikal aufgestellt zu werden, d.h. der Zylindermantel des Gehäuseabschnitts erstreckt sich von der Ebene (Erdboden) senkrecht nach oben.

Die Querschnittsform des Gehäuseabschnitts ist in den Ausführungsbeispielen unterschiedlich, zum Beispiel kreisförmig, eckig (drei-, vier-, sechseckig oder ein anderes Vieleck), ellipsenförmige, etc. In der folgenden Beschreibung wird zur Vereinfachung der Begriff "Gehäuseabschnitt" alleine verwendet, ohne immer das Adjektiv "zylinderförmig" voranzustellen. Im Folgenden ist aber mit "Gehäuseabschnitt" immer ein zylinderförmiger Gehäuseabschnitt gemeint.

Der Gehäuseabschnitt wird aus einem hitzebeständigen Material hergestellt, wie bspw. Metall (Edelstahl oder dergleichen).

Am oberen Ende des Gehäuseabschnitts ist der Verbrennungsabschnitt angeordnet. Der Verbrennungsabschnitt ist zumindest teilweise im Inneren des Gehäuseabschnitts angeordnet, damit der Brennstoff (Pellets, Hackschnitzelgut), der im Verbrennungsabschnitt verbrennt, nicht herausfallen kann.

Der Hubtisch ist im Inneren des Gehäuseabschnitts angeordnet und weist eine Ebene, z.B. eine Platte bzw. Tisch, auf, auf der der Brennstoff aufliegt. Diese Ebene ist bei manchen Ausführungsformen an den Innenquerschnitt des Gehäuseabschnitts so angepasst, dass zwischen dem Hubtisch und der Innenseite des Gehäuseabschnitts kein Brennstoff nach unten fallen kann.

Der Hubtisch teilt folglich den Gehäuseabschnitt in zwei Bereiche auf, einen oberen Bereich, in dem der Brennstoff und der Verbrennungsabschnitt angeordnet sind, und einen unteren, der hohl ist. Durch Verschieben des Hubtisches gegen die Schwerkraft nach oben, wird der Brennstoff, der auf dem Hubtisch aufliegt, gegen die Schwerkraft in den Verbrennungsabschnitt geschoben und kann dort verbrannt werden.

In dem oberen Bereich des Gehäuseabschnitts, der einen durch den verschiebbarenen Hubtisch variablen Brennstoffbehälter bildet, kann der Brennstoff entsprechend eingefüllt werden. So können bspw. Pellets oder Hackschnitzel in den oberen Bereich (Brennstoffbehälter) eingefüllt würden. Der schüttfähige, feste Brennstoff überlagert sich entsprechend so übereinander, dass wenig Zwischenraum zwischen den einzelnen Bestandteilen übrig bleibt und somit auch wenig Sauerstoff zwischen den einzelnen Bestandteilen vorhanden ist.

In dem Verbrennungsabschnitt verbrennt bei manchen Ausführungsbeispielen nicht der gesamte Brennstoff auf einmal, sondern es bildet sich eine Verbrennungsschicht in dem Brennstoff aus, die eine Verbrennungszone im Verbrennungsabschnitt bildet. Brennstoff, der unterhalb der Verbrennungsschicht liegt, verbrennt aufgrund Sauerstoffmangels nicht, da durch die dichte Lagerung der einzelnen Bestandteile des Brennstoffs, bspw. der einzelnen Pellets oder Hackschnitzel, zu wenig Sauerstoff für eine Verbrennung vorhanden ist. Primärluft für die Verbrennung des Brennstoffs wird im Verbrennungsabschnitt so zugeführt, dass (nur) der oben liegende Brennstoff verbrennt.

Dadurch, dass der Hubtisch verschiebbar ist, kann entsprechend des Abbrandes des Brennstoffs der Hubtisch nach oben verschoben werden und somit neuer Brennstoff der Verbrennung zugeführt bzw. nachgeführt werden. Verbrennungsrückstände fallen dann bei manchen Ausführungsbeispielen einfach aus dem Verbrennungsabschnitt bpsw. durch entsprechend vorgesehene Öffnungen heraus. Damit ist es bspw. im Gegensatz zum bekannten Holzkohlegrill, bei dem nur am Anfang eine bestimmte Menge Holzkohle zugeführt wird, möglich, die Verbrennung durch kontinuierlichen Brennstoffnachschub aufrechtzuerhalten. Beim bekannten Holzkohlegrill kann hingegen typischerweise nur eine bestimmte Menge an Brennstoff verbrannt werden und es ist nicht möglich, Brennstoff nachzuführen und gleichzeitig eine stabile Verbrennung mit konstanter Temperatur aufrechtzuerhalten.

Die Anordnung des Fördermittels für den Brennstoff, d.h. des Hubtisches, im Inneren des Gehäuses ermöglicht außerdem eine besonders kompakte Bauweise des Hubtischbrenners.

Typischerweise wird der Hubtisch vor dem Befüllen mit Brennstoff, z.B. Pellets, ganz noch unten verschoben. Die Pellets werden dann bis zum Rand, bspw. bis zum Beginn des Verbrennungsabschnitts in den oberen Bereich des Gehäuseabschnitts eingefüllt. Bei manchen Ausführungsbeispielen ist das Volumen des oberen Bereichs so ausgebildet, dass es eine bestimmte Menge an Brennstoff aufnehmen kann, bspw. 25kg Pellets, wie es in handelsüblichen Mengen angeboten wird.

Für die definierte Verschiebung des Hubtisches weist der Hubtischbrenner bei manchen Ausführungsbeispielen eine Spindel auf, an der der Hubtisch eingreift. Der Hubtisch kann dazu ein Gewinde aufweisen, das an dem Gewinde der Spindel eingreift. Durch Drehen der Spindel, wird der Hubtisch nach oben verschoben. Bei anderen Ausführungsbeispielen ist der Hubtisch fest mit der Spindel verbunden und durch Drehen verschiebt sich die Spindel zusammen mit dem Hubtisch. Dabei ist bspw. die Spindel in einer Gewindehülse im Boden des Gehäuseabschnitts drehgelagert.

Bei manchen Ausführungsbeispielen weist der Hubtischbrenner eine Luftzufuhr auf, die Primärluft seitlich in den Verbrennungsabschnitt zuführt. Die Luftzufuhr kann dabei als Luftkanal und/oder Öffnung im Gehäuseabschnitt bzw. Verbrennungsabschnitt ausgestaltet sein, sodass Luft seitlich und/oder schräg von oben in die Verbrennungszone des Verbrennungsabschnitts zugeführt wird. Durch die gerichtete Zufuhr von Primärluft kann die Verbrennungszone innerhalb des Verbrennungsabschnitts genau festgelegt werden. Von der zugeführten Luftmenge hängt bei manchen Ausführungsbeispielen auch ab, wie dick die Verbrennungsschicht im Brennstoff ist (je mehr Luft zugeführt wird, desto dicker ist die Verbrennungsschicht und umgekehrt).

Bei manchen Ausführungsformen ist in der Luftzufuhr auch ein Luftsteuermittel angeordnet, wie bspw. eine Luftklappe als passives Luftsteuermittel oder dergleichen, mittels derer die zugeführte Luftmenge gesteuert werden kann. Bei manchen Ausführungsbeispielen ist ein aktives und/oder passives Luftsteuermittel angeordnet. Ein aktives Luftsteuermittel ist bspw. ein Luftgebläse, das entsprechend eine vorgegebene Luftmenge zuführen kann.

Bei manchen Ausführungsbeispielen ist zusätzlich ein Stellantrieb vorgesehen, um die Position des Hubtisches innerhalb des zylinderförmigen Gehäuseabschnitts einzustellen. Der Stellantrieb kann rein mechanischer Natur sein und bspw. eine Kurbel aufweisen. Bei anderen Ausführungsbeispielen weist der Stellantrieb hingegen einen elektrischen Motor auf, sodass die Position des Hubtisches elektrisch, bei manchen Ausführungsformen sogar automatisch, eingestellt werden kann. Auch eine Mischform aus elektrischen und mechanischen Stellantrieben ist verwirklicht. So ist bspw. neben dem elektrischen Motor noch eine Kurbel vorgesehen, um bspw. bei einem Stromausfall den Hubtisch bedienen zu können. So kann die Verbrennung bei manchen Ausführungsbeispielen gelöscht werden, indem der Hubtisch vollständig abgesenkt wird, da dann nicht mehr ausreichend Sauerstoff für die Verbrennung zugeführt wird. Außerdem ist bei manchen Ausführungsbeispielen eine Löscheinrichtung vorgesehen (bspw. ein Deckel mit dem der Gehäuseabschnitt verschlossen werden kann und damit die Verbrennung gestoppt werden kann).

Zur Steuerung des Stellantriebes bzw. des elektrischen Motors ist bei manchen Ausführungsbeispielen eine Steuerung vorgesehen, die den elektrischen Motor derart steuert, dass die Position des Hubtischs in Abhängigkeit des Abbrands des Brennstoffs in dem Verbrennungsabschnitt eingestellt wird. Bei manchen Ausführungsbeispielen ist in der Steuerung das Abbrandverhalten des Brennstoffs gespeichert, sodass die Steuerung darauf basierend den elektrischen Motor des Stellantriebs steuert. Beispielsweise ist das Abbrandverhalten von Pellets wohlbekannt, da diese typischerweise genormt sind und somit die Größe und der Energieinhalt vorgegeben sind. Folglich ist in der Steuerung bekannt, wieviel Zeit die Verbrennung einer bestimmten Menge an Pellets benötigt. Dementsprechend kann der Stellantrieb zeitlich so gesteuert werden, dass der Hubtisch die verbrannte Menge Pellets entsprechend kontinuierlich oder in entsprechenden Intervallen getaktet in den Verbrennungsabschnitt zuführt. Bei anderen Ausführungsbeispielen ist bspw. ein Sensor vorgesehen, anhand dessen der Verbrennungsfortschritt ermittelt und der Stellantrieb gesteuert wird.

Bei manchen Ausführungsbeispielen ist der Verbrennungsabschnitt konisch ausgestaltet und bspw. aus Metall (Edelstahl) oder einem anderen feuerfesten Material hergestellt. Die Seite des konisch geformten Verbrennungsabschnittes mit dem größeren Durchmesser ist in Richtung des Hubtisches angeordnet. Durch die konische Formgebung werden die Verbrennungsgase zusammengeführt und die bei der Verbrennung entstehende Flamme wird gebündelt.

Für die Luftzufuhr weist der Verbrennungsabschnitt Öffnungen auf. Die Öffnungen sind bei manchen Ausführungsbeispielen kleiner als die Durchschnittsgröße der einzelnen Bestandteile des Brennstoffes, sodass der Brennstoff nicht durch die Öffnungen fallen kann. Außerdem können die Öffnungen oberhalb der Verbrennungszone angeordnet sein, um das Herausfallen von Brennstoff durch die Öffnungen zu vermeiden.

Bei manchen Ausführungsbeispielen wir der Hubtischbrenner für einen Grill zum Grillen von Grill verwendet. Der Grill umfasst entsprechend einen Hubtischbrenner wie er oben erörtert wurde, ein Grillgehäuse, das an einem Ende des Verbrennungsabschnitts angeordnet ist; und eine Grillplatte, die oberhalb des Verbrennungsabschnitts angeordnet und mit dem Grillgehäuse verbunden ist.

Die Grillplatte ist für die Aufnahme von Grillgut, wie bspw. Grillfleisch, Gemüse, oder dergleichen vorgesehen. Die von dem Hubtischbrenner erzeugte Flamme erwärmt die Grillplatte von unten, sodass das darauf befindliche Grillgut gegrillt werden kann.

Das Grillgehäuse ist bei manchen Ausführungsbeispielen derart ausgestaltet, dass es das Grillgut und die Flamme des Hubtischbrenners vor unerwünschten Luftströmungen schützt.

Bei manchen Ausführungsbeispielen wird der oben diskutierte Hubtischbrenner auch für eine Biomassefeuerung zum Verbrennen von schüttfähigen, festen, organischen Brennstoff, insbesondere Pellets, verwendet. Die Biomassefeuerung umfasst entsprechend einen Hubtischbrenner, wie oben erörtert, und einen Brennraumgehäuseabschnitt, der an dem Ende des Hubtischbrenners angeordnet ist, an dem auch der Verbrennungsabschnitt angeordnet ist.

Der Brennraumgehäuseabschnitt ist dazu ausgelegt, dass in ihm die von dem Hubtischbrenner erzeugte Flamme brennt. Bei manchen Ausführungsbeispielen weist der Brennraumgehäuseabschnitt typische Bestandteile einer Biomassefeuerung auf, wie bspw. eine Feuerraumtür, eine Rauchgasführung und/oder eine Glasscheibe usw.

Bei manchen Ausführungsbeispielen ist der Brennraumgehäuseabschnitt drehbar mit dem Hubtischbrenner verbunden. Zum Beispiel sind der Brennraumgehäuseabschnitt und der Hubtischbrenner über ein Scharnier miteinander verbunden, sodass der Brennraumgehäuseabschnitt vom darunterliegenden Hubtischbrenner weggeklappt werden kann, sodass der Hubtischbrenner mit Brennstoff befüllt werden kann.

Zurückkommend zu Fig. 1 veranschaulicht diese ein Ausführungsbeispiel eines Hubtischpelletbrenners 1, im Folgenden auch "Pelletbrenner 1" genannt, in Übereinstimmung mit der vorliegenden Erfindung.

Der Pelletbrenner 1 ist dazu ausgelegt, Pellets 3 zu verbrennen. Er hat ein kreiszylinderförmiges Gehäuse 2, wobei die Länge des Kreiszylindergehäuses 2 größer als sein Durchmesser ist. Das Gehäuse 2 ist auf einem Sockel 8 angebracht auf dem der Pelletbrenner 1 auf dem Boden aufgestellt ist.

Am oberen Ende des Pelletbrenners 1 bzw. des Gehäuses 2 findet sich ein konischer Verbrennungsabschnitt 11, der eine Vielzahl von Luftöffnungen 12 aufweist. Der Verbrennungsabschnitt 1 ist aus Edelstahl hergestellt und die hat die Form eines koniischen Zylindermantels, wobei das Ende mit dem größeren Durchmesser unten und das Ende mit dem kleineren Durchmesser oben angeordnet ist, um eine bei der Verbrennung der Pellets 3 entstehende Flamme 13 zu bündeln.

Im Inneren des Pelletbrenners 1 ist ein Hubtisch 6 angeordnet, der mit einer Spindel 5 verbunden ist, die sich mittig und vertikal durch das Innere des Gehäuses 2 erstreckt.

Der Hubtisch 6 ist eine kreisförmige Platte, die in der Mitte ein Loch hat, wobei unterhalb des Lochs eine Gewindehülse angesetzt ist, durch die sich die Spindel 5 erstreckt und in die sie eingreift. Durch Drehen der Spindel 5, wird der Hubtisch 6, je nach Drehrichtung der Spindel 5, aufwärts oder abwärts bewegt.

Die kreisförmige Platte des Hubtischs 6 hat einen Durchmesser, der nur geringfügig kleiner als der Innendurchmesser des Gehäuses 2 ist, sodass der Hubtisch 6 ohne große Reibung an der Innenwand des Gehäuses 2 bewegbar ist und gleichzeitig keine Pellets durch den Zwischenraum zwischen Hubtisch 6 und Innenwand des Gehäuses 2 nach unten fallen können.

Der Hubtisch 6 unterteilt den Innenraum des Gehäuses 2 in einen oberen Bereich, der als Pelletbehälter für die Pellets 3 dient, wobei die Oberfläche des Hubtischs 6 den Boden des Pelletbehälters bildet, und einen unteren Bereich 4, der hohl bleibt.

Der obere Bereich (Pelletbehälter) ist durch die Verschiebbarkeit des Hubtisches 6 variabel und erreicht das maximale Volumen, wenn der Hubtisch 6 ganz nach unten zum Boden des Gehäuses 2 verschoben ist, und das kleinste Volumen, wenn der Hubtisch 6 ganz nach oben verschoben ist und an der Unterseite des konischen Verbrennungsabschnitts 11 anstößt.

Die Spindel 5 erstreckt sich durch den Boden des Gehäuses 2 und durch die obere Platte des Sockels 8 und ist mit einem elektrischen Antrieb 7 verbunden. Der elektrischen Antrieb 7 ist ferner mit einer Steuerung (nicht gezeigt) verbunden, die während des Betriebs des Pelletbrenners 1 die Spindel 5 und damit die Position, d.h. die Höhe, des Hubtisches 6 steuert. In der Steuerung ist das Abbrandverhalten von Pellets hinterlegt, sodass sie darauf basierend die Höhe des Hubtisches 6 entsprechend den verbrannten Pellets 3 in dem Verbrennungsabschnitt 11 steuern kann, wie es auch schon weiter oben beschrieben wurde.

Für die Luftzufuhr von Primärluft hat der Pelletbrenner 1 einen Luftkanal 9 an dem ein Luftgebläse 10 angeschlossen ist, das wiederum mit der Steuerung verbunden ist. Außerdem findet sich in dem Luftkanal 9 eine Zündeinrichtung 14, die so angeordnet ist, dass sie die obenliegenden Pellets 3 in dem konischen Verbrennungsabschnitt 11 anzünden kann.

Im vorliegenden Ausführungsbeispiel ist die Zündeinrichtung 14 für den manuellen Betrieb vorgesehen, während bei anderen Ausführungsbeispielen die Zündeinrichtung 14 ebenfalls mit der Steuerung verbunden ist, die dann auch den Zündvorgang der Pellets steuert. Im Betrieb steuert die Steuerung entsprechen das Luftgebläse 10, sodass ausreichend Primärluft in den Verbrennungsabschnitt 11 gelangt. Die Luftöffnungen 12 im Verbrennungsabschnitt 11 dienen ebenfalls der Luftzufuhr und außerdem können feste Verbrennungsreste (Asche) durch sie nach außen gelangen.

Während des Betriebs des Pelletbrenners 1 verbrennt nur die obere Schicht der Pellets 3, die sich in dem Verbrennungsabschnitt 11 befindet, da diese ausreichend mit Verbrennungsluft versorgt wird. Tieferliegende Pellets 3 verbrennen nicht, da dort keine ausreichen Luftzufuhr vorhanden ist. Wie erwähnt, führt die Steuerung mittels des elektrischen Antriebs 7 den Hubtisch 6 entsprechend des Abbrandes der Pellets 3 in dem Verbrennungsabschnitt 11 nach oben, sodass kontinuierlich unverbrannte Pellets 3 in den Verbrennungsabschnitt 11 nachgeführt werden, die Asche abgeführt wird und somit eine kontinuierliche Verbrennung bei gleichbleibender Verbrennungstemperatur erzielt wird.

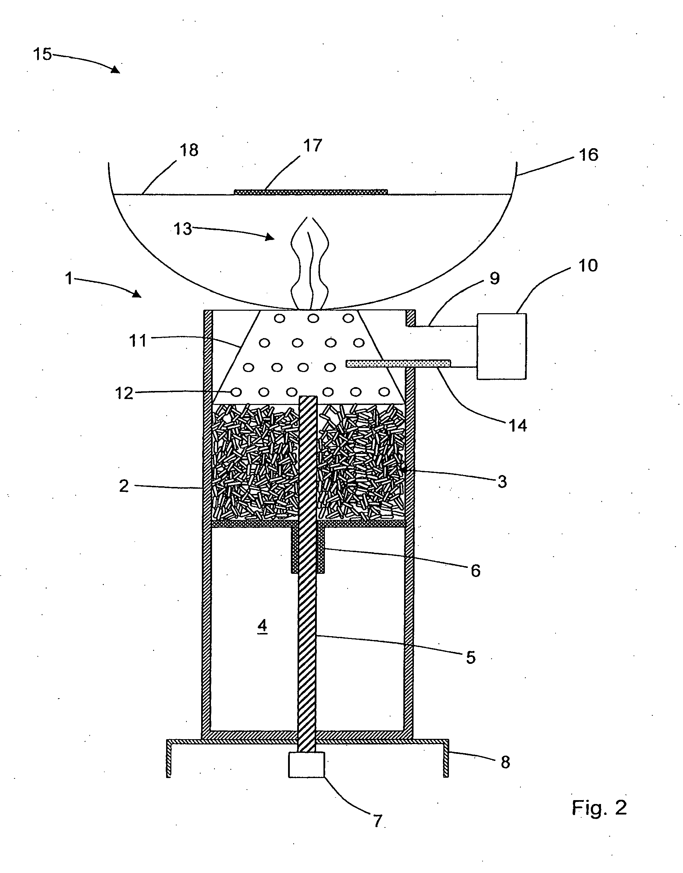

Der Pelletbrenner 1 ist vielseitig einsetzbar. Der Einsatz des Pelletbrenners 1 in einem Grill 15 ist in Fig. 2 veranschaulicht. Hier ist oben an dem Pelletbrenner 1 und oberhalb des konischen Verbrennungsabschnitts 11 ein Grillgehäuse 16 angebracht, das halbkugelförmig ist und aus Edelstahl hergestellt ist.

Das Grillgehäuse 16 dient als Schutz gegen Wind und außerdem als Halterung für eine Halterung 18 an der eine Grillplatte 17 für Grillgut befestigt ist. Die Grillplatte 17 ist oberhalb der Flamme 13 angeordnet, sodass die Flamme die Grillplatte 17 entsprechend erhitzt, wodurch Grillgut auf der Grillplatte 17 gegrillt wird.

Die sonstige Funktionsweise des Pelletbrenner 1 entspricht derjenigen, wie sie im Zusammenhang mit Fig. 1 beschrieben wurde.

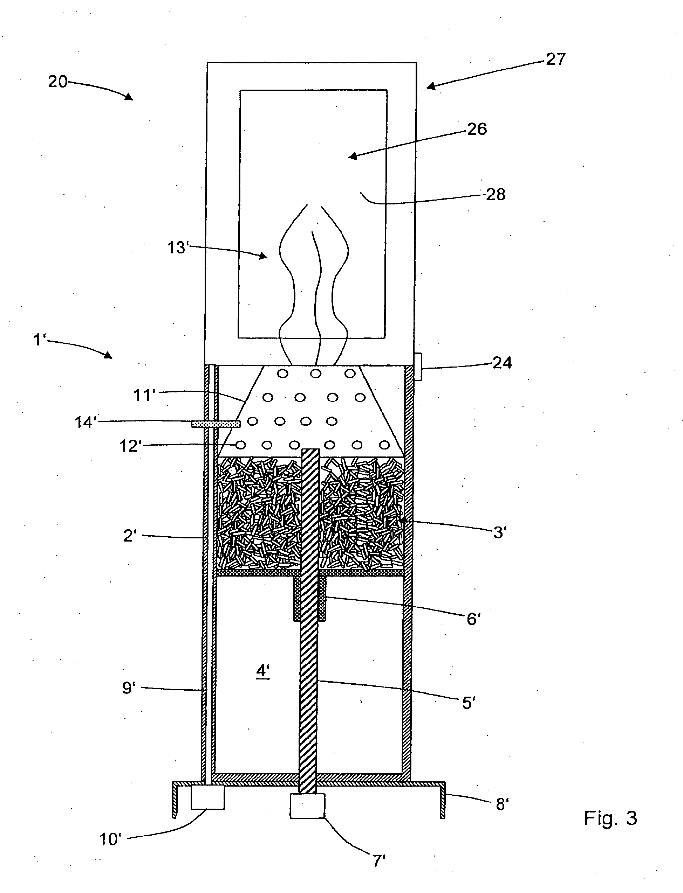

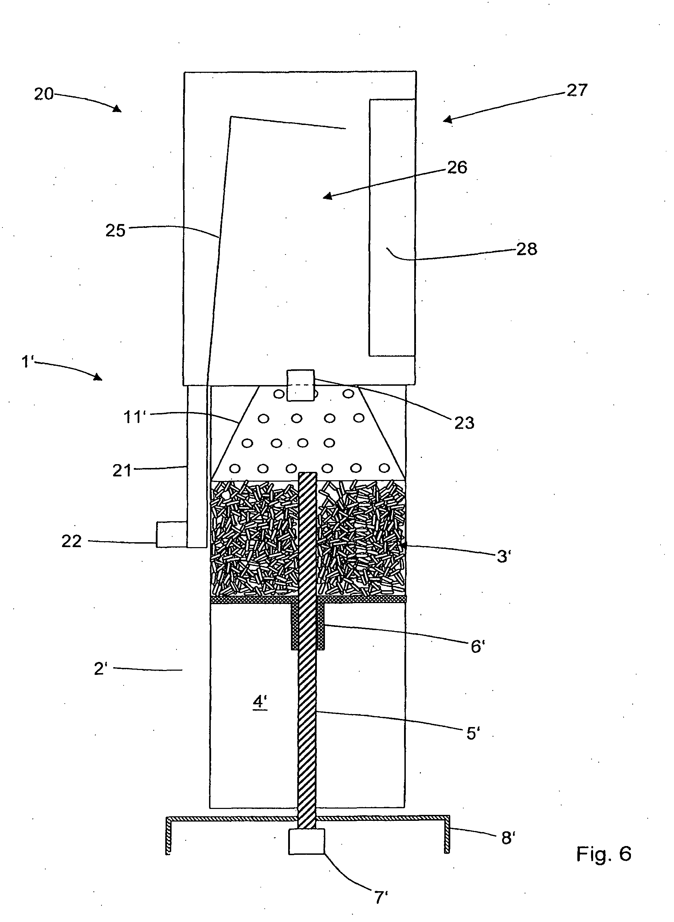

Der Pelletbrenner ist aber auch für eine Biomassefeuerung, z.B. einen Pelletofen 20 einsetzbar, wie in den Fig. 3 bis 6 veranschaulicht ist.

Der Pelletbrenner 1' des Pelletofens 20 entspricht im Wesentlichen dem Pelletbrenner 1 der Fig. 1, bis auf kleinere Modifikationen, die im Folgenden kurz erläutert werden (die mit Strich versehenen Bezugszeichen zeigen Elemente des Pellebrenners 1', die im Wesentlichen denjenigen des Pelletbrenners 1 entsprechen, die mit den gleichen Bezugszeichen ohne Strich gezeigt sind). So ist eine Luftzuführung 9' am Gehäuse 2 vertikal verlaufend angeordnet und ein zugehöriges Luftgebläse 10' ist in einem Sockel 8' des Pelletbrenners 1 angeordnet. Eine Zündeinrichtung 14' ist in ähnlicher Weise wie beim Pelletbrenner 1 der Fig. 1 im unteren Bereich des konischen Verbrennungsabschnitts 11' mit Öffnungen 12' angeordnet. Ansonsten hat der Pelletbrenner 1' ein kreiszylinderförmiges Gehäuse 2' mit einem innen angeordneten Hubtisch 6' mit Spindel 5', die von einem elektrischen Stellantrieb 7' angetrieben wird. Das Gehäuse 2' steht auf dem Sockel 8' in dem sowohl das Luftgebläse 10' und der elektrische Stellantrieb 7' angeordnet sind.

Die Funktionsweise des Pelletbrenners 1' entspricht der Funktionsweise des Pelletbrenners 1, wie schon im Zusammenhang mit Fig. 1 erläutert, und es wird diesbezüglich vollumfänglich auf die zughörige Beschreibung zum Pelletbrenner 1 von Fig. 1 verwiesen, um unnötige Wiederholungen zu vermeiden.

Auf dem Pellebrenner 1' ist ein Brennraumgehäuse 27 aufgesetzt, das einen Brennraum 26 aufweist, in der die Flamme 13' brennen kann. Damit die Flamme 13' gesehen werden kann, ist eine Glasscheibe 28 in dem Brennraumgehäuse 27 vorgesehen.

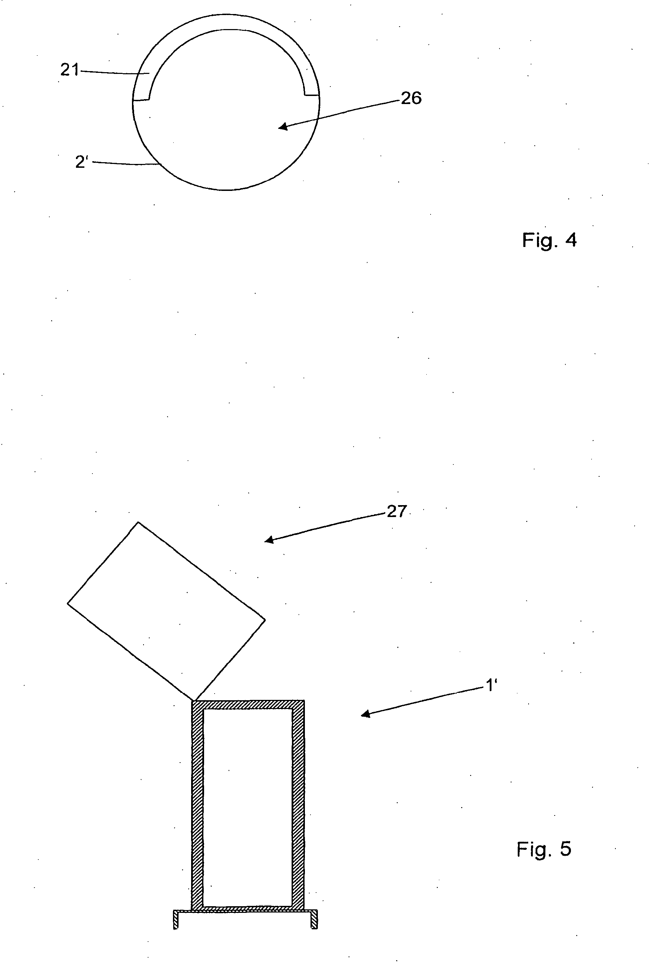

Das Brennraumgehäuse 27 ist durch ein Scharnier 23 mit dem zylindrischen Gehäuse 2' des Pelletbrenners 1' verbunden, sodass das Brennraumgehäuse 27 um eine durch das Scharnier 23 vorgegebene horizontale Achse gekippt werden kann (siehe Fig. 5). Wenn das Brennraumgehäuse 27 weggeklappt ist, so ist der Pelletbrenner 1' von oben zugänglich und Pellets 3' können eingefüllt werden.

Nach Befüllung mit den Pellets 3' wird das Brennraumgehäuse 27 wieder zurückgeklappt und mit einem Kniehebel 24 fest mit dem Pelletbrenner 1' verbunden, sodass der Innenraum auch im Wesentlichen dicht verschlossen ist. Der Kniehebel 24 ist an der Außenseite des Brennraumgehäuses 27 angebracht und greift in eine entsprechenden Haken an der Außenseite des Pelletbrenners 1' ein.

Im Inneren des Brennraumgehäuses 27 ist eine Rauchgasführung 25 angeordnet, sodass von der Flamme 13' erzeugtes Rauchgas um die im Inneren des Brennraumgehäuses 27 angeordnete Rauchgasführung 25 herumgeleitet wird und in einen Rauchgaskanal 21 gelangt, an dem die Rauchgasführung 25 endet.

Der Rauchgaskanal 21 ist in der Rückwand des zylindrischen Gehäuses 2' des Pelletbrenners 1' angeordnet und hat einen Rauchgasanschluss 22 an der Rückseite des zylindrischen Gehäuses 2' durch den das Rauchgas abgeleitet wird. Der Rauchgaskanal 21 hat einen halbrunden Querschnitt dessen Rundung an die Rundung des zylindrischen Gehäuses 2' angepasst ist.

Im Betrieb funktioniert der Pelletbrenner 1' wie oben bereits für den Pelletbrenner 1 der Fig. 1 beschrieben wurde. Die Steuerung steuert den elektrischen Stellantrieb 7' sowie das Luftgebläse 10' für eine optimale Verbrennung und eine kontinuierliche Brennstoffzufuhr durch Heben des Hubtisches 6'.

Durch die kompakte Bauweise des Pelletbrenners 1' und die sichere Bedienung ist es möglich, einen entsprechend kompakten Pelletofen 20 bereitzustellen. Bei einer besonderes kostengünstigen Variante kann der elektrische Stellantrieb 7' durch eine Kurbel ersetzt werden und ggf. das Luftgebläse 10' weggelassen werden (insbesondere bspw. wenn der Rauchgasanschluss 22 an einen Kamin angeschlossen wird, sodass ein entsprechendes Rauchgaszug entsteht).

## Patentansprüche

1. Hubtischbrenner zur Verbrennung eines schüttfähigen, festen, organischen Brennstoffs, insbesondere Pellets, umfassend:
einen zylinderförmigen Gehäuseabschnitt (2, 2') zum Aufnehmen des Brennstoffs (3, 3'),
einen Verbrennungsabschnitt (11, 11'), der in einem Endbereich des zylinderförmigen Gehäuseabschnitts (2, 2') angeordnet ist, und
einen Hubtisch (6, 6') zum Zuführen des in dem zylinderförmigen Gehäuseabschnitt (2, 2') angeordneten Brennstoffes (3, 3') in den Verbrennungsabschnitt (11, 11'), wobei der Hubtisch (6, 6') innerhalb des zylinderförmigen Gehäuseabschnitts (2, 2') angeordnet ist und innerhalb des zylinderförmigen Gehäuseabschnitts (2, 2') verschiebbar ist.

2. Hubtischbrenner nach Anspruch 1, weiter eine Spindel (5, 5') aufweisend, an der der Hubtisch (6, 6') eingreift.

3. Hubtischbrenner nach einem der vorhergehenden Ansprüche, wobei Primärluft seitlich in den Verbrennungsabschnitt (11, 11') durch eine Luftzufuhr (9, 9') zugeführt wird.

4. Hubtischbrenner nach einem der vorhergehenden Ansprüche, weiter einen Stellantrieb (7, 7') aufweisend, zum Einstellen der Position des Hubtischs (6, 6') innerhalb des zylinderförmigen Gehäuseabschnitts (2, 2').

5. Hubtischbrenner nach Anspruch 4, ferner eine Steuerung aufweisend, die den einen Stellantrieb (7, 7') derart steuert, dass die Position des Hubtischs (6, 6') in Abhängigkeit des Abbrands des Brennstoffs (3, 3') in dem Verbrennungsabschnitt (11, 11') eingestellt wird.

6. Hubtischbrenner nach Anspruch 4 oder 5, wobei der Stellantrieb (7, 7') einen elektrischen Motor umfasst.

7. Hubtischbrenner nach einem der vorhergehenden Ansprüche, wobei der Verbrennungsabschnitt (11, 11') konisch ausgestaltet ist und Öffnungen (12, 12') für die Luftzufuhr aufweist.

8. Grill zum Grillen von Grillgut, umfassend:
einen Hubtischbrenner (1) nach einem der vorhergehenden Ansprüche;
ein Grillgehäuse (16), das an einem Ende des Verbrennungsabschnitts (11) angeordnet ist; und
eine Grillplatte (18), die oberhalb des Verbrennungsabschnitts (11) angeordnet und mit dem Grillgehäuse (16) verbunden ist.

9. Biomassefeuerung zum Verbrennen von schüttfähigen, festen, organischen Brennstoff, insbesondere Pellets, umfassend:
einen Hubtischbrenner (1') nach einem der Ansprüche 1 bis 7, und
einen Brennraumgehäuseabschnitt (27), der an dem Ende des Hubtischbrenners (1') angeordnet ist, an dem auch der Verbrennungsabschnitt (11') angeordnet ist.

10. Biomassefeuerung nach Anspruch 9, wobei der Brennraumgehäuseabschnitt (27) drehbar mit dem Hubtischbrenner (1')verbunden ist.

## Claims

1. Lifting table burner for burning a pourable solid organic fuel, particularly pellets, comprising:
a cylindrical housing section (2, 2') for receiving the fuel (3, 3'),
a combustion section (11, 11'), arranged in an end section of the cylindrical housing section (2, 2'),
a lifting table (6, 6') for feeding the fuel (3, 3') arranged in the cylindrical housing section (2, 2') into the combustion section (11, 11'), wherein the lifting table (6, 6') is arranged inside the cylindrical housing section (2, 2') and is displaceable inside the cylindrical housing section (2, 2').

2. Lifting table burner according to claim 1, further comprising a spindle (5, 5'), in which the lifting table (6, 6') engages.

3. Lifting table burner according to any one of the preceding claims, wherein primary air is supplied laterally into the combustion section (11, 11') by means of an air supply (9, 9').

4. Lifting table burner according to any one of the preceding claims, further comprising an actuator (7, 7') for adjusting the position of the lifting table, (6, 6') inside the cylindrical housing (2, 2').

5. Lifting table burner according to claim 4, further comprising a control system which controls the one actuator (7, 7') in such a way that the position of the lifting table (6, 6') in the combustion section (11, 11') is adjusted depending on the consumption of the fuel (3, 3').

6. Lifting table burner according to claim 4 or 5, wherein the actuator (7, 7') comprises an electric motor.

7. Lifting table burner according to any one of the preceding claims, wherein the combustion section (11, 11') is designed conically and comprises openings (12, 12') for the supply of air.

8. Grill for grilling barbecue food, comprising:
a lifting table burner (1) according to any one of the preceding claims,
a grill housing (16), which is arranged at one end of the combustion section (11); and
a grill plate (18), which is arranged above the combustion section (11) and is connected to the grill housing (16).

9. Biomass furnace for burning a pourable solid organic fuel, particularly pellets, comprising:
a lifting table burner (1') according to any one of claims 1 to 7, and
a combustion chamber housing section (27), which is arranged at the end of the lifting table burner (1'), on which the combustion section (11') is arranged.

10. Biomass furnace according to claim 9, wherein the combustion chamber housing section (27) is rotatably connected to the lifting table burner (1').

## Revendications

1. Brûleur à table élévatrice destiné à la combustion d'un combustible organique solide versable, en particulier de granulés, comprenant :
une partie d'enceinte cylindrique (2, 2') pour la réception du combustible (3, 3'),
une partie de combustion (11, 11') prévue dans une zone d'extrémité de la partie d'enceinte cylindrique (2, 2'), et
une table élévatrice (6, 6') pour l'alimentation de la partie de combustion (11, 11') en combustible (3, 3') disposée dans la partie d'enceinte cylindrique (2, 2'), ladite table élévatrice (6, 6') étant prévue à l'intérieur de la partie d'enceinte cylindrique (2, 2') et étant coulissante à l'intérieur de la partie d'enceinte cylindrique (2, 2').

2. Brûleur à table élévatrice selon la revendication 1, comportant en outre un axe (5, 5') sur lequel s'engrène la table élévatrice (6, 6').

3. Brûleur à table élévatrice selon l'une des revendications précédentes, où de l'air primaire est alimenté latéralement dans la partie de combustion (11, 11') par une alimentation d'air (9, 9').

4. Brûleur à table élévatrice selon l'une des revendications précédentes, comportant en outre un actionneur (7, 7') pour régler la position de la table élévatrice (6, 6') à l'intérieur de la partie d'enceinte cylindrique (2, 2').

5. Brûleur à table élévatrice selon la revendication 4, comportant en outre une commande, laquelle commande l'actionneur (7, 7') de manière à régler la position de la table élévatrice (6, 6') en fonction de la combustion du combustible (3, 3') dans la partie de combustion (11, 11').

6. Brûleur à table élévatrice selon la revendication 4 ou 5, où l'actionneur (7, 7') comprend un moteur électrique.

7. Brûleur à table élévatrice selon l'une des revendications précédentes, où la partie de combustion (11, 11') est de forme conique et présente des ouvertures (12, 12') pour l'alimentation d'air.

8. Gril pour griller des produits à griller, comprenant :
un brûleur à table élévatrice (1) selon l'une des revendications précédentes ;
une enceinte de gril (16) prévue à une extrémité de la partie de combustion (11) ; et
une plaque de gril (18) disposée au-dessus de la partie de combustion (11) et reliée à l'enceinte de gril (16).

9. Installation de chauffe à biomasse pour la combustion de combustibles organiques solides versable, en particulier de granulés, comprenant :
un brûleur à table élévatrice (1') selon l'une des revendications 1 à 7, et
une partie d'enceinte de chambre de combustion (27) prévue à l'extrémité du brûleur à table élévatrice (1'), contre lequel est également disposée la partie de combustion (11').

10. Installation de chauffe à biomasse selon la revendication 9, où la partie d'enceinte de chambre de combustion (27) est reliée de manière rotative au brûleur à table élévatrice (1').
